# EUROPEAN PATENT SPECIFICATION

(11) **EP 3 160 128 B1**
(45) Date of publication and mention of the grant of the patent: **21.08.2019**
(21) Application number: 14893688.3
(22) Date of filing: 05.09.2014
(51) Int. Cl.: H04N 5/232, G10L 15/22

(54) **INTELLIGENT WEARING DEVICE-BASED MOBILE TERMINAL SHOOTING CONTROL METHOD AND SYSTEM THEREFOR**
AUF EINER INTELLIGENTEN TRAGEVORRICHTUNG BASIERTES FILMSTEUERUNGSVERFAHREN EINES MOBILEN ENDGERÄTS UND SYSTEM DAFÜR
PROCÉDÉ DE COMMANDE DE PRISE DE VUE DE TERMINAL MOBILE BASE SUR UN DISPOSITIF PORTABLE INTELLIGENT ET SYSTÈME CORRESPONDANT

(30) Priority: 23.06.2014 CN 201410282116
(43) Date of publication of application: 26.04.2017
(73) Proprietor: Huizhou TCL Mobile Communication Co., Ltd., Huizhou, Guangdong 516006 (CN)
(72) Inventor: YANG, Yan, Huizhou Guangdong 516006 (CN); CHEN, Xiling, Huizhou Guangdong 516006 (CN)
(74) Representative: ZHAOffice SPRL
(86) International application number: PCT/CN2014/085972
(87) International publication number: WO 2015/196564

(56) References cited:
- CN-A- 103 108 127
- CN-A- 103 558 916
- CN-A- 103 702 028
- CN-U- 201 774 589
- US-A- 6 021 278
- US-A1- 2004 135 879
- US-A1- 2006 244 837
- US-A1- 2009 247 245
- US-A1- 2009 262 205
- US-A1- 2011 058 052
- US-A1- 2013 124 207
- US-A1- 2013 235 222
- US-B1- 8 271 287

## Description

### FIELD OF THE DISCLOSURE

The present disclosure relates to the field of mobile terminals, and in particular, to a mobile terminal photographing control method and system based on smart wearable devices.

### BACKGROUND OF THE DISCLOURE

As communication technologies continue to evolve and mature, the software in mobile terminals is becoming more and more functional with the growing popularity of mobile terminals, and users are having more and more personalized demands. However, with the increasingly merger of mobile operation systems and hardware platforms, homogeneity of software functions is becoming more and more severe. Thus, constant innovation to bring in new personalized software functions has become an imperative way to maintain the competitiveness of terminal products.

The US patent application US2013124207A1 relates to a computing device (e.g., a smart phone, a tablet computer, digital camera, or other device with image capture functionality) causes an image capture device to capture one or more digital images based on audio input (e.g., a voice command) received by the computing device. For example, a user's voice (e.g., a word or phrase) is converted to audio input data by the computing device, which then compares (e.g., using an audio matching algorithm) the audio input data to an expected voice command associated with an image capture application. In another aspect, a computing device activates an image capture application and captures one or more digital images based on a received voice command. In another aspect, a computing device transitions from a low-power state to an active state, activates an image capture application, and causes a camera device to capture digital images based on a received voice command.

The US patent application US2006244837A1 relates to A thermal camera includes an antenna for providing wireless communication and elements for storing data received through the wireless communication elements in connection with an image recorded by the camera. The camera may also include a signal conversion unit for converting commands received through the antenna to a command format recognized by the camera. The antenna is arranged to communicate with a wireless user communication device, such as a headset including a microphone and/or a phonespeaker. The camera may further include alarm elements for determining dangerous situations and to warn an operator through the wireless interface. The thermal camera is particularly suitable for use in dangerous environments.

The US patent application US2004135879A1 relates to a portable wireless video system comprises a pan and tilt mechanism supporting a video camera, and remote wireless mechanism in electronic communication with the pan and tilt mechanism and video camera. The remote wireless mechanism includes a video transmitter for transmitting video signals generated by the video camera and communicated to the remote wireless mechanism. A portable wireless terminal has a receiver and a display for displaying sequenced images from the video signal. The portable wireless terminal also includes a keypad for generating pan and tilt commands which are transmitted to the remote wireless mechanism, which in turn controls the pan and tilt mechanism in response thereto. The camera may be mounted to the top of a tall mast and the video signals may be conveyed to the portable wireless terminal via a cellular phone network.

The US patent US6021278A relates to a camera for recognizing voice commands, and for visually displaying an image to be captured by the camera with camera operations performed thereon as instructed by the voice commands, the camera comprises a camera body; a microphone disposed on the camera body for inputting voice commands; a controller disposed in the camera body for receiving and recognizing voice commands, and for implementing results of the voice command; and a display attached to the camera body for visually displaying the image to-be-captured by the camera with the camera operations performed thereon as instructed by the voice commands.

The US patent application US2011058052A1 relates to a camera capable of capturing still images and video and included in a portable media device can be controlled remotely using an accessory. The accessory can register with the PMD to automatically receive notifications whenever there is a change in the camera state. The camera states can include mode, operation status, and configuration settings. The accessory can send instructions to a camera application that interfaces with the camera to control the camera. The accessory can remotely activate the camera, change camera mode, and send instructions to operate the camera. The accessory and the PMD can concurrently control the camera. The PMD can send the captured still images and recorded video to the accessory for preview and receive instructions from the accessory on disposition of the still images and the video.

The US patent application US20090262205A1 relates to a voice activated headset imaging system and elements thereof enable hands-free imaging. Hands-free imaging in some embodiments of the invention comprises receiving by a headset assembly a voice command and executing by the headset assembly an imaging control instruction generated in response to the voice command. Execution of the imaging control instruction involves an operation such as activating an object pointer, capturing an image, deleting a captured image or downloading a captured image.

The US patent application US20090247245A1 relates to an electronic headset comprising connectivity functionality, the connectivity functionality arranged to allow the headset to be operatively coupled to a remote associated electronic device for the transmission of signalling between the headset and the device, the headset further comprising camera functionality arranged to capture one or more images, and wherein the camera functionality is arranged to be controlled by control signalling transmitted via the connectivity functionality, the control signalling being processed by the remote associated electronic device and being sent to the electronic headset to control the camera functionality

The US patent application US20130235222A1 relates to a digital camera system includes an image capture module and a remote control module. The image capture module includes an image capture system and a first wireless communication system. The remote control module includes a status display with one or more status display elements for displaying status information pertaining to the image capture module, a battery-operated power supply, one or more user controls, a second wireless communication, and a power management system providing a normal-power state and a low-power state. The system is configured such that when a user activates one of the user controls while the remote control module is in the low-power state the remote control module is set to operate in the normal-power state, a status inquiry is sent to the image capture module, and returned status information is displayed on the status display

The US patent US8271287B1 relates to a method and apparatus for controlling electronic devices from a remote location. The method and apparatus utilizes a remote control device which receives and transmits voice commands as electrical signals to at least one controlled device having a recognition processor which converts received electrical signals to pattern data and compares that pattern data with data stored in the processor. The invention may incorporate the use of a recorder for recording electrical signals in the remote or controlled device and may further include a teaching circuit for retrieving and reproducing voice commands as visual or audio prompts as needed. The invention may be adapted to control multiple controlled devices in coordination so that each coordinated device is made to perform the same or a different function in response to a single voice command is disclosed.

Currently, photographing functions in most mobile terminals are manually activated by the user according to particular needs, and cannot be automatically switched via remote control, for example, via gestures, which is very inconvenient for the user.

Therefore, the prior art has yet to be improved and developed.

### SUMMARY OF THE DISCLOSURE

The technical problem the present disclosure attempting to solve is, directing at the above mentioned deficiencies existing in the prior art, to provide a mobile terminal photographing control method and system based on smart wearable devices, which is designed to remedy the deficiencies in the prior art that photographing functions of the mobile terminal need to be manually switched by the user.

A technical solution adopted by the present disclosure in order to solve the technical problem is defined by the method claims 1 to 6 and by the system claims 7 to 11.

In the mobile terminal photographing control method and system based on smart wearable devices provided by the present disclosure, the method comprises: receiving by the smart wearable device an operational command from the user, and in particular, acquiring and recognizing a voice command of the user, and transmitting the voice command to the mobile terminal; receiving by the mobile terminal the voice command, which is compared against a preset control commands list corresponding to various photographing functions of the mobile terminal, when the command matching the voice command is found in the control commands list, activating by the mobile terminal the corresponding photographing function, and feeding back a match success command to the smart wearable device. The smart wearable device in the present disclosure controls, according to the received voice command, the mobile terminal within a short distance switch among various photographing functions, thus eliminating the need for manual switching and bringing the user enormous convenience.

### BRIEF DESCRIPTION OF THE DRAWINGS

FIG. 1 is a flow chart diagram of a mobile terminal photographing control method based on a smart wearable device according to an exemplary embodiment of the present disclosure.
FIG. 2 is a block diagram of a mobile terminal photographing control system based on a smart wearable device according to an exemplary embodiment of the present disclosure.

### DETAILED DESCRIPTION OF THE DISCLOSURE

In order to make the purposes and technical solutions and advantages of the present disclosure clear and definite, a detailed description will be made on the present disclosure with reference to the accompanying drawings and cited embodiments. It should be appreciated that specific embodiments described herein are merely used to illustrate but not to limit the present disclosure.

In the following description, specific embodiments of the present disclosure will be described with reference to steps or symbols executed by one or more computers, unless otherwise stated. Therefore, these steps and operations will be mentioned more than once to be executed by computers. Computer execution referred to herein comprises operations performed by computer processing units, which represent electronic signals of the data within a structured type. These operations transform the data or maintain the data in the memory system of the computer, wherein the data can be reconfigured or otherwise change the functioning of the computer through means well known by one of ordinary skill in the art. The data structure maintained by the data is the physical location of the memory. The data structure comprises particular characteristics defined by the data format. Although the principles of the present disclosure are illustrated by the above text, it should not be construed as a limit to the present disclosure, and one of ordinary skill in the art will understand that the steps and operations described below can also be implemented by hardware.

The principles of the present disclosure may be performed by utilizing a number of other general-purposed or special-purposed operation environments, communication environments, or configurations. Examples of well-known operation systems, operation environments and configurations applicable to the present disclosure can comprise, but are not limited to, handheld phones, personal computers, servers, multi-processor systems, micro-computer based systems, main frame computers and distributed computing environments including any of the above mentioned systems or apparatuses.

The term "module" can be regarded as software objects executed on the computing system. The various components, modules, engines and services described herein can be regarded as objects implemented in the computing system. Methods described herein are preferably implemented in the form of software, and can without doubt be implemented by hardware, both falling within the scope of claim of the present disclosure.

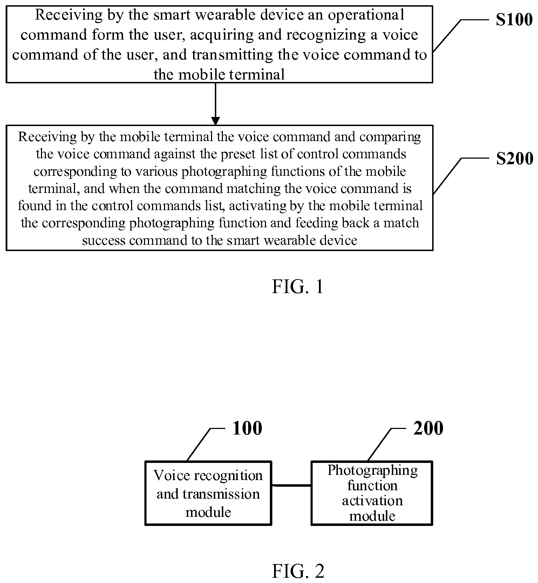

Referring to FIG. 1, which is a flow chart diagram of a mobile terminal photographing control method based on a smart wearable device according to an exemplary embodiment of the present disclosure. As is shown in FIG. 1, the mobile terminal photographing control method based on a smart wearable device comprises the following steps:
Step S100: Receiving by the smart wearable device an operational command from the user, and in particular, acquiring and recognizing a voice command of the user and transmitting the voice command to the mobile terminal.

In an exemplary embodiment according to the present disclosure, when the user desires to activate one of various photographing functions in the mobile terminal, the user may enable the voice recognition function of the smart wearable device, and may render any voice commands to the smart wearable device. The smart wearable device acquires and recognizes the voice command from the user, and transmits the voice command to the mobile terminal. It should be noted that, in the step S100, the mobile terminal doesn't directly acquire the voice command from the user, but indirectly acquire the voice command of the user via the smart wearable device, thus a problem that the mobile terminal cannot distinctly recognize the voice command because it is relatively far away from the user and thus resulting in the failure of voice acquisition is avoided.

Step S200: Receiving by the mobile terminal the voice command, and comparing the voice command against a preset control commands list corresponding to various photographing functions of the mobile terminal, when the command matching the voice command is found in the control commands list, activating by the mobile terminal the corresponding photographing function, and feeding back a match success command to the smart wearable device.

In the step S200, when the mobile terminal receives the voice command, the voice command is compared against the preset control commands list corresponding to various photographing functions of the mobile terminal. When the command matching the voice command is found in the control commands list, the mobile terminal activates the corresponding photographing function, and feeds back the match success command to the smart wearable device. Certainly, if the match fails, the mobile terminal may also send a feedback message to the smart wearable device, prompting the user whether the mobile terminal has activated the corresponding photographing function successfully or not.

In addition, the embodiment further comprises, before the step S100 where the smart wearable device acquires the voice command:
S10: Presetting a control commands list corresponding to various photographing functions of the mobile terminal.

Specifically, for example, the control commands list can be set as Table 1 which is shown below:

**Table 1**

| Voice commands | Functions |
|---|---|
| taking a photo | The terminal takes a photo according to current device mode |
| Parameter-modifying photographing mode | The terminal enters the parameter-modifying photographing mode |
| Selecting Panorama mode | The terminal selects the panorama mode to photograph |
| Other user-defined commands | The terminal receives and stores the user-defined voice commands. |

The contents in Table 1 are for illustration only. The commands that can be stored by the mobile terminal may include but are not limited to the above commands. These voice commands have attributes of being addable, editable and deletable.

In a further embodiment, the step S200 also comprises: prompting the smart wearable device the user through vibration and a synchronous pop-up menu.

In addition, this embodiment further comprises, after the step S200 where a photographing function is activated:
S300: When the command matching the voice command is not found in the control commands list, feeding back by the mobile terminal a match failure command to the smart wearable device; the smart wearable device receiving the match failure command, and prompting the user according to the match failure command.

In particular, when the smart wearable device receives the match success command, then it is determined whether the prompting mode of the smart wearable device is vibration. When the prompting mode of the smart wearable device is determined to be vibration, then the smart wearable device prompts the user by vibration, and the user may check the pop-up menu on the smart wearable device after he/she perceives the vibration alert. He/she may begin to take photos after checking the match success message. When the prompting mode of the smart wearable device is determined not to be vibration, then the wearable device prompts the user to check the pop-up menu by a buzzing sound.

As can be seen, no matter whether the voice command are matched successfully or not, the smart wearable device will generally prompt the user to check the pop-up menu through vibration or a buzzing sound, so as to enable the user to timely acquire the information whether the corresponding photographing function has been activated or not, which facilitates the user to perform the next operation.

Further, the step S100 where the smart wearable device acquires the voice command further comprises:
Step S101: Receiving by the smart wearable device an operational command from the user, and acquiring and recognizing a voice command of the user.
Step S102: Converting by the smart wearable device the voice command to digital voice information by analog-to-digital conversion.

In the step S102, an ADC (analog-to-digital converter) in the smart wearable device converts the voice command into digital signals, which are further processed by DSP (digital signal processing) into pure PCM (pulse-code modulation) data, i.e., digital voice information.

Step S103: Transmitting by the smart wearable device the digital voice information to the mobile terminal.

In addition, the step S200 of activating the photographing function further comprises:
Step S201: Receiving by the mobile terminal the digital voice information.
Step S202: Comparing the digital voice information against a preset control commands list corresponding to various photographing functions of the mobile terminal.

In the preset control commands list in step S10, all the commands are found in the form of digital voice information, i.e., in the form of pure PCM data. Therefore, the comparison between the digital voice information and the preset control commands list is the comparison between PCM data.

Step S203: When the command matching the digital voice information is found in the control commands list, activating by the mobile terminal the corresponding photographing function, and feeding back a match success command to the smart wearable device.

Below a specific application example will be utilized to further explain the technical solution according to the present disclosure.

Providing the mobile terminal is 2 meters apart from the user, when the user renders to the smart wearable device a voice command of "selecting panorama mode", the smart wearable device receives the voice command and converts the voice command into digital voice information, which is further sent to the mobile terminal. The mobile terminal receives the digital voice information and compares the digital voice information against a preset control commands list corresponding to various photographing functions of the mobile terminal. When the command matching the digital voice information of "selecting Panorama mode" is found in the control commands list, the mobile terminal selects the Panorama mode and takes photos accordingly, and simultaneously feeds back a match success command to the smart wearable device. The smart wearable device receives the match success command and prompts the user via vibration. The user checks the pop-up menu displayed on the display of the smart wearable device, knowing the match is successful and preparing to take photos.

As can be seen from above, the smart wearable device remotely controls the mobile terminal activate corresponding photographing functions, thus, the role of the smart wearable device is similar to a remote controller. By the above mentioned remote voice control, the user can take a photograph of himself/herself without others' help, providing enormous convenience to the user.

Base on the aforementioned embodiments, the present disclosure further provides a mobile terminal photographing control system based on a smart wearable device. The mobile terminal photographing control system comprises, as is shown in FIG. 2:
a voice recognition and transmitting module 100, being configured to receive by the smart wearable device an operational command from the user and acquire and recognize a voice command of the user, and transmit the voice command to the mobile terminal; for detailed description, see above;
a photographing function activation module 200, being arranged to receive by the mobile terminal the voice command, and compare the voice command against a preset control commands list corresponding to various photographing functions of the mobile terminal. When the command matching the voice command is found in the control commands list, the mobile terminal activates the corresponding photographing function, and feeds back a match success command to the smart wearable device; for detailed description, see above.

In addition, the mobile terminal photographing control system based on a smart wearable device further comprises:
an error prompting module 300, being configured to, when the command matching the voice command is not found in the control commands list, feedback by the mobile terminal a match failure command to the smart wearable device; the smart wearable device receives the match failure command, and prompts the user according to the match failure command.

Additionally, the voice recognition and transmitting module 100 further comprises:
a voice acquisition and recognition module 101, being configured to receive by the smart wearable device an operational command from the user, and in particular, acquire and recognize a voice command of the user; for detailed description, see above;
a code modulation unit 102, being configured to convert by the smart wearable device the voice command to digital voice information by analog-to-digital conversion; for detailed description, see above;
a transmitting unit 103, being configured to transmit by the smart wearable device the digital voice information to the mobile terminal; for detailed description, see above.

In addition, the photographing function activation module 200 specifically comprises:
a receiving unit 201, being configured to receive by the mobile terminal the digital voice information; for detailed description, see above;
a comparing unit 202, being configured to compare the digital voice information against a preset control commands list corresponding to various photographing functions of the mobile terminal; for detailed description, see above;
a photographing function activation unit 203, being configured to, when the command matching the digital voice information is found in the control commands list, activate by the mobile terminal the corresponding photographing function, and feedback a match success command to the smart wearable device; for detailed description, see above;

In summary, the present disclosure provides a mobile terminal photographing control method and system based on smart wearable devices, the method comprising: receiving by the smart wearable device an operational command from the user, and in particular, acquiring and recognizing a voice command of the user, and transmitting the voice command to the mobile terminal; receiving by the mobile terminal the voice command, which is compared against a preset control commands list corresponding to various photographing functions of the mobile terminal, when the command matching the voice command is found in the control commands list, activating by the mobile terminal the corresponding photographing function, and feeding back a match success command to the smart wearable device. The smart wearable device in the present disclosure controls, according to the received voice command, the mobile terminal within a short distance switch among various photographing functions, thus eliminating the need for manual switching and bringing huge convenience to the user.

It should be appreciated that the application of the present disclosure should not be limited to the above examples, which can be further improved or transformed by one of ordinary skill in the art according to the above description. Any improvements or transformations should all be covered within the scope of appended claims of the present disclosure.

## Claims

1. A mobile terminal photographing control method based on a smart wearable device, comprising:
receiving by the smart wearable device an operational command from a user, acquiring and recognizing a voice command of the user, and transmitting by the smart wearable device the voice command to the mobile terminal (S100);
receiving by the mobile terminal the voice command, and comparing the voice command against a preset control commands list corresponding to a plurality of photographing functions of the mobile terminal; when the control command matching the voice command is found in the preset control commands list, activating by the mobile terminal the corresponding photographing function, and feeding back by the mobile terminal a match success command to the smart wearable device (S200);
**characterized by** :
receiving by the smart wearable device the match success command and prompting the user according to the match success command, wherein the smart wearable device prompts the user via vibration and a synchronous pop-up menu.

2. The mobile terminal photographing control method according to claim 1, further comprising, after the step of receiving by the mobile terminal the voice command and comparing the voice command against the preset control commands list corresponding to the plurality of photographing functions of the mobile terminal:
when the command matching the voice command is not found in the control commands list, feeding by the mobile terminal a match failure command back to the smart wearable device; and receiving by the smart wearable device the match failure command and prompting the user according to the match failure command.

3. The mobile terminal photographing control method based on a smart wearable device according to any one of the foregoing claims, wherein the step of receiving by the smart wearable device the operational command from the user, acquiring and recognizing the voice command of the user, and transmitting by the smart wearable device the voice command to the mobile terminal, comprises:
converting by the smart wearable device the voice command to digital voice information by analog-to-digital conversion; and
transmitting by the smart wearable device the digital voice information to the mobile terminal.

4. The mobile terminal photographing control method based on a smart wearable device according to claim 3, wherein the step of "receiving by the mobile terminal the voice command and comparing the voice command against the preset control commands list corresponding to the plurality of photographing functions of the mobile terminal, and when the command matching the voice command is found in the control commands list, activating by the mobile terminal the corresponding photographing function, and feeding back by the mobile terminal the match success command to the smart wearable device (S200)", comprises:receiving by the mobile terminal the digital voice information;when the command matching the digital voice information is found in the control commands list, activating the corresponding photographing function of the mobile terminal.

5. The mobile terminal photographing control method based on a smart wearable device according to claim 2, wherein the step of receiving by the smart wearable device the match failure command and prompting the user according to the match failure command comprises:
receiving by the smart wearable device the match failure command, and prompting the user according to the match failure command by vibration and a pop-up menu.

6. The mobile terminal photographing control method according to any one of the foregoing claims, wherein the voice command and the preset control commands are in the form of PCM (pulse-code modulation) data.

7. A mobile terminal photographing control system based on a smart wearable device, the system comprising a smart wearable device and a mobile terminal :
the smart wearable device including a
voice recognition and transmitting module (100), being configured to receive an operational command from a user, acquire and recognize a
voice command of the user, and transmit by the smart wearable device the voice command to the mobile terminal;
the mobile terminal including a
photographing function activation module (200), being arranged to receive
the voice command, and compare the voice command against a preset
control commands list corresponding to a plurality of photographing functions of the mobile terminal, activate the corresponding photographing function when
the control command matching the voice command is found in the preset control commands list,
and feedback a match success command to the smart wearable device;
**characterized in that**
the smart wearable device is configured to receive the match success command and prompt the user according to the match success command via vibration and a synchronous pop-up menu.

8. The mobile terminal photographing control system based on a smart wearable device according to claim 7, wherein the mobile terminal further comprises :
an error prompting module, being configured to, when the command matching the voice command is not found in the control commands list, feedback
a match failure command to the smart wearable device; wherein the smart wearable device is configured to receive
the match failure command, and prompt the user according to the match failure command.

9. The mobile terminal photographing control system based on a smart wearable device according to claim 8, wherein the voice recognition and transmitting module (100) comprises:
a voice acquisition and recognition unit, being configured to receive an operational command from the user, acquire and recognize a voice command of the user;
a code modulation unit, being configured to convert the voice command to digital voice information through analog-to-digital conversion;
a transmitting unit, being configured to transmit the digital voice information to the mobile terminal.

10. The mobile terminal photographing control system based on a smart wearable device according to claim 9, wherein the photographing function activation module (200) comprises:
a receiving unit, being configured to receive the digital voice information;
a comparing unit, being configured to compare the digital voice information against the preset control commands list corresponding to the plurality of photographing functions of the mobile terminal;
a photographing function activation unit, being configured to, when the command matching the digital voice information is found in the control commands list, activate the corresponding photographing function, and feedback a match success command to the smart wearable device.

11. The mobile terminal photographing control system according to any one of the claims 8-10, wherein the error prompting module prompts the user, by vibration and a pop-up menu, according to the match failure command.

## Patentansprüche

1. Fotografiersteuerungsverfahren eines mobilen Endgeräts auf einer intelligenten Tragevorrichtung basiert, umfassend:
Empfangen durch die intelligente Tragevorrichtung eines Betriebsbefehls von einem Benutzer, Erfassen und Erkennen eines Sprachbefehls des Benutzers, und Übertragen des Sprachbefehls durch die intelligente Tragevorrichtung auf das Endgerät (S100);
Empfangen durch das Endgerät des Betriebsbefehls, und Vergleichen des Betriebsbefehls mit einer voreingestellten Steuerbefehlsliste, die einer Vielfalt von Fotografierfunktionen des mobilen Endgeräts entspricht; wenn der dem Sprachbefehl entsprechende Steuerbefehl in der voreingestellten Steuerbefehlsliste gefunden wird, Aktivieren des übereinstimmenden Fotografierfunktion durch das mobile Endgerät, und Rückmelden eines Übereinstimmungserfolgsbefehls durch das Endgerät an die intelligente Tragevorrichtung (S200);
**gekennzeichnet durch**:
Empfangen durch die intelligente Tragevorrichtung des Übereinstimmungserfolgsbefehls und Auffordern des Benutzers gemäß dem Übereinstimmungserfolgsbefehls, wobei die intelligente Tragevorrichtung den Benutzer über Schwingungen und ein synchrones Popup-Menü auffordert.

2. Fotografiersteuerungsverfahren eines mobilen Endgeräts nach Anspruch 1, weiter umfassend, nach dem Schritt des Empfangens durch das Endgerät des Betriebsbefehls, und des Vergleichens des Betriebsbefehls mit der voreingestellten Steuerbefehlsliste, die einer Vielfalt von Fotografierfunktionen des mobilen Endgeräts entspricht:
wenn der dem Sprachbefehl entsprechende Steuerbefehl in der voreingestellten Steuerbefehlsliste nicht gefunden wird, Rückmelden eines Übereinstimmungsfehlerbefehls durch das Endgerät an die intelligente Tragevorrichtung; und Empfangen des Übereinstimmungsfehlerbefehls durch die intelligente Tragevorrichtung und Auffordern des Benutzers gemäß dem Übereinstimmungsfehlerbefehl.

3. Fotografiersteuerungsverfahren eines mobilen Endgeräts auf einer intelligenten Tragevorrichtung basiert nach einem der vorhergehenden Ansprüche, wobei der Schritt des Empfangens durch die intelligente Tragevorrichtung eines Betriebsbefehls von dem Benutzer, des Erfassens und Erkennens des Sprachbefehls des Benutzers, und des Übertragens des Sprachbefehls durch die intelligente Tragevorrichtung auf das Endgerät umfasst:
Umwandeln durch die intelligente Tragevorrichtung des Sprachbefehls in digitale Sprachinformationen durch Analog-Digital-Wandlung; und Übermitteln durch die intelligente Tragevorrichtung der digitalen Sprachinformationen zum mobilen Endgerät.

4. Fotografiersteuerungsverfahren eines mobilen Endgeräts auf einer intelligenten Tragevorrichtung basiert nach Anspruch 3, wobei der Schritt des "Empfangens durch das Endgerät des Betriebsbefehls, und Vergleichens des Betriebsbefehls mit der voreingestellten Steuerbefehlsliste, die der Vielfalt von Fotografierfunktionen des mobilen Endgeräts entspricht, und wenn der dem Sprachbefehl entsprechende Steuerbefehl in der voreingestellten Steuerbefehlsliste gefunden wird, des Aktivierens des übereinstimmenden Fotografierfunktion durch das mobile Endgerät, und Rückmeldens eines Übereinstimmungserfolgsbefehls durch das mobile Endgerät an die intelligente Tragevorrichtung (S200)", umfasst: Empfangen durch das mobile Endgerät der digitalen Sprachinformationen; wenn der den digitalen Sprachinformationen entsprechende Befehl in der voreingestellten Steuerbefehlsliste gefunden wird, Aktivieren des übereinstimmenden Fotografierfunktion des mobilen Endgeräts.

5. Fotografiersteuerungsverfahren eines mobilen Endgeräts auf einer intelligenten Tragevorrichtung basiert nach Anspruch 2, wobei der Schritt des Empfangens durch die intelligente Tragevorrichtung des Übereinstimmungsfehlerbefehls und des Aufforderns des Benutzers gemäß dem Übereinstimmungsfehlerbefehls umfasst:
Empfangen durch die intelligente Tragevorrichtung des Übereinstimmungsfehlerbefehls und Auffordern des Benutzers gemäß dem Übereinstimmungsfehlerbefehls über Schwingungen und ein synchrones Popup-Menü.

6. Fotografiersteuerungsverfahren eines mobilen Endgeräts auf einer intelligenten Tragevorrichtung basiert nach einem der vorhergehenden Ansprüche, wobei der Sprachbefehl und die voreingestellten Steuerbefehle in der Form von PCM-Daten (Pulse-Code-Modulation) sind.

7. Fotografiersteuerungssystem eines mobilen Endgeräts, wobei das System eine intelligente Tragevorrichtung und ein mobiles Endgerät umfasst:
wobei die intelligente Tragevorrichtung ein Spracherfassungs- und Übertragungsmodul (100) umfasst, das zum Empfangen eines Betriebsbefehls von einem Benutzer, zum Erfassen und Erkennen eines Sprachbefehls von einem Benutzer, und zum Übertragen des Sprachbefehls durch die intelligente Tragevorrichtung auf das Endgerät konfiguriert ist;
wobei das mobile Endgerät eine Fotografierfunktionsaktivierungsmodul (200) umfasst, das zum Empfangen des Sprachbefehls und zum Vergleichen des Sprachbefehls mit einer voreingestellten Steuerbefehlsliste, die einer Vielfalt von Fotografierfunktionen des mobilen Endgeräts entspricht, zum Aktivieren der entsprechenden Fotografierfunktion, wenn der dem Sprachbefehl entsprechende Steuerbefehl in der voreingestellten Steuerbefehlsliste gefunden wird, und zum Rückmelden eines Übereinstimmungserfolgsbefehls an die intelligente Tragevorrichtung gestaltet ist;
**dadurch gekennzeichnet ist, dass** die intelligente Tragevorrichtung zum Empfangen des Übereinstimmungserfolgsbefehls und zum Auffordern des Benutzers gemäß dem Übereinstimmungserfolgsbefehl über Schwingungen und ein synchrones Popup-Menü konfiguriert ist.

8. Fotografiersteuerungssystem eines mobilen Endgeräts auf einer intelligenten Tragevorrichtung basiert nach Anspruch 7, wobei das mobile Endgerät weiter umfasst:
ein Fehleraufforderungsmodul, das, wenn der dem Sprachbefehl entsprechende Steuerbefehl in der voreingestellten Steuerbefehlsliste nicht gefunden wird, zum Rückmelden eines Übereinstimmungsfehlerbefehls an die intelligente Tragevorrichtung konfiguriert ist, wobei die intelligente Tragevorrichtung zum Empfangen des Übereinstimmungsfehlerbefehls und zum Auffordern des Benutzers gemäß dem Übereinstimmungsfehlerbefehl konfiguriert ist.

9. Fotografiersteuerungssystem eines mobilen Endgeräts auf einer intelligenten Tragevorrichtung basiert nach Anspruch 8, wobei das Spracherfassungs- und Übertragungsmodul (100) umfasst:
eine Spracherfassungs- und Spracherkennungsmodul, das zum Empfangen eines Betriebsbefehls von dem Benutzer, zum Erfassen und Erkennen eines Sprachbefehls des Benutzers konfiguriert ist;
eine Codemodulationseinheit, die zum Umwandeln des Sprachbefehls in digitale Informationsdaten über Analog-Digital-Wandlung konfiguriert ist;
eine Übertragungseinheit, die zum Übertragen der digitalen Informationsdaten auf das mobile Endgerät konfiguriert ist.

10. Fotografiersteuerungssystem eines mobilen Endgeräts auf einer intelligenten Tragevorrichtung basiert nach Anspruch 9, wobei das Fotografierfunktionsaktivierungsmodul (200) umfasst:
eine Empfangseinheit, die zum Empfangen der digitalen Sprachinformationen konfiguriert ist;
eine Vergleichseinheit, die zum Vergleichen der digitalen Sprachinformationen mit der voreingestellten Steuerbefehlsliste konfiguriert ist, die der Vielfalt von Fotografierfunktionen des mobilen Endgeräts entspricht;
eine Fotografierfunktionaktivationseinheit, die, wenn der den digitalen Sprachinformationen entsprechende Befehl in der Steuerbefehlsliste gefunden wird, zum Aktivieren der entsprechenden Fotografierfunktion, und zum Rückmelden eines Übereinstimmungserfolgsbefehls an die intelligente Tragevorrichtung konfiguriert ist

11. Fotografiersteuerungssystem eines mobilen Endgeräts nach einer der Ansprüche 8 - 10, wobei das Fehleraufforderungssystem den Benutzer, über Schwingungen und ein Popup-Menü, gemäß dem Übereinstimmungsfehlerbefehl auffordert.

## Revendications

1. Procédé de commande de prise de vue de terminal mobile basé sur un dispositif portable intelligent, comprenant :
réception par le dispositif portable intelligent d'une commande opérationnelle de la part d'un utilisateur, acquisition et reconnaissance d'une commande vocale d'un utilisateur, et transmission par le dispositif portable intelligent de la commande vocale au terminal mobile (S100);
réception par le terminal mobile de la commande vocale, et comparaison de la commande vocale par rapport à une liste de commandes de contrôle préétablies correspondant à une pluralité de fonctions photographiques du terminal mobile; lorsque la commande de contrôle correspondant à la commande vocale est trouvée dans la liste de commandes de contrôle préétablies, activation par le terminal mobile de la fonction photographique correspondante, et renvoi par le terminal mobile d'une commande de correspondance réussie vers le dispositif portable intelligent (S200); **caractérisé par**:
la réception par le dispositif portable intelligent de la commande de correspondance réussie et par l'incitation de l'utilisateur selon la commande de correspondance réussie, où le dispositif portable intelligent incite l'utilisateur par vibration et par un menu déroulant synchrone.

2. Procédé de commande de prise de vue de terminal mobile basé sur un dispositif portable intelligent selon la revendication 1, comprenant en outre, après l'étape de réception par le terminal mobile de la commande vocale et de comparaison de la commande vocale par rapport à des commandes de contrôle préétablies correspondant à une pluralité de fonctions photographiques du terminal mobile: lorsque la commande de contrôle correspondant à la commande vocale n'est pas trouvée dans la liste de commandes de contrôle préétablies, renvoi par le terminal mobile d'une commande d'échec de correspondance vers le dispositif portable intelligent; et réception par le dispositif portable intelligent de la commande d'échec de correspondance et incitation de l'utilisateur selon la commande d'échec de correspondance.

3. Procédé de commande de prise de vue de terminal mobile basé sur un dispositif portable intelligent selon l'une quelconque des revendications précédentes, dans lequel l'étape de réception par le dispositif portable intelligent de la commande opérationnelle de la part de l'utilisateur, d'acquisition et de reconnaissance de la commande vocale de l'utilisateur, et de transmission par le dispositif portable intelligent de la commande vocale au terminal mobile, comprend:
conversion par le dispositif portable intelligent de la commande vocale en informations vocales numériques par conversion analogique-numérique; et
transmission par le dispositif portable intelligent des informations vocales numériques au terminal mobile.

4. Procédé de commande de prise de vue de terminal mobile basé sur un dispositif portable intelligent selon la revendication 3, dans lequel l'étape de "réception par le terminal mobile de la commande vocale, et comparaison de la commande vocale par rapport à la liste de commandes de contrôle préétablies correspondant à une pluralité de fonctions photographiques du terminal mobile, lorsque la commande de contrôle correspondant à la commande vocale est trouvée dans la liste de commandes de contrôle préétablies, activation par le terminal mobile de la fonction photographique correspondante, et renvoi par le terminal mobile d'une commande de correspondance réussie vers le dispositif portable intelligent (S200)" comprend:
réception par le terminal mobile des informations vocales numériques; lorsque la commande correspondant aux informations vocales numériques est trouvée dans la liste de commandes de contrôle, activation de la fonction correspondante du terminal mobile.

5. Procédé de commande de prise de vue de terminal mobile basé sur un dispositif portable intelligent selon la revendication 2, dans lequel l'étape de réception par le dispositif portable intelligent de la commande d'échec de correspondance et d'incitation de l'utilisateur selon la commande d'échec de correspondance, comprend:
réception par le dispositif portable intelligent de la commande d'échec de correspondance, et incitation de l'utilisateur selon la commande d'échec de correspondance par vibration et par un menu déroulant.

6. Procédé de commande de prise de vue de terminal mobile selon l'une quelconque des revendications précédentes, dans lequel la commande vocale et les commandes de contrôle préétablies présentent la forme de données PCM (modulation par codage d'impulsions).

7. Système de commande de prise de vue de terminal mobile basé sur un dispositif portable intelligent, le système comprenant un dispositif portable intelligent et un terminal mobile:
le dispositif portable intelligent comportant
un module de reconnaissance vocale et de transmission (100) configuré pour recevoir une commande opérationnelle de la part d'un utilisateur le dispositif portable intelligent, pour acquérir et reconnaître une commande vocale de l'utilisateur, et pour transmettre par le dispositif portable intelligent de la commande vocale au terminal mobile;
le terminal mobile comportant un module d'activation de fonction photographique (200), aménagé pour recevoir la commande vocale, et pour comparer la commande vocale par rapport à une liste de commandes de contrôle préétablies correspondant à une pluralité de fonctions photographiques du terminal mobile, pour activer la fonction photographique correspondante lorsque la commande de contrôle correspondant à la commande vocale est trouvée dans la liste de commandes de contrôle préétablies, activation par le terminal mobile de, et pour renvoyer une commande de correspondance réussie vers le dispositif portable intelligent.
**caractérisé en ce que** le dispositif portable intelligent est configuré pour recevoir la commande de correspondance réussie et pour inciter l'utilisateur selon la commande de correspondance réussie, par vibration et par un menu déroulant synchrone.

8. Système de commande de prise de vue de terminal mobile basé sur un dispositif portable intelligent selon la revendication 7, dans lequel le terminal mobile comprend en outre:
un module d'incitation d'erreur configuré pour renvoyer une commande d'échec de correspondance au dispositif portable intelligent, lorsque la commande correspondant à la commande vocale n'est pas trouvée dans la liste de commandes de contrôle; procédé dans lequel le dispositif portable intelligent est configuré pour recevoir la commande d'échec de correspondance, et d'inciter l'utilisateur selon la commande d'échec de correspondance.

9. Système de commande de prise de vue de terminal mobile basé sur un dispositif portable intelligent selon la revendication 8, dans lequel le module de reconnaissance vocale et de transmission comprend:
une unité d'acquisition et reconnaissance vocale configurée pour recevoir une commande opérationnelle de la part de l'utilisateur, pour acquérir et reconnaître une commande vocale de l'utilisateur;
une unité de modulation par codage configurée pour convertir la commande vocale en informations vocales numériques par conversion analogique-numérique;
une unité de transmission configurée pour transmettre les infrmations vocales numériques au terminal mobile.

10. Système de commande de prise de vue de terminal mobile basé sur un dispositif portable intelligent selon la revendication 9, dans lequel le module d'activation de fonction photographique (200) comprend:
une unité de réception configurée pour recevoir les informations vocales numériques;
une unité de comparaison configurée pour comparer les informations vocales numériques par rapport à la liste de commandes de contrôle préétablies correspondant à la pluralité de fonctions photographiques du terminal mobile;
une unité d'activation de fonction photographique configurée pour activer la fonction photographique correspondante lorsque correspondante lorsque la commande de contrôle correspondant à la commande vocale est trouvée dans la liste de commandes de contrôle préétablies, et pour renvoyer une commande de correspondance réussie vers le dispositif portable intelligent.

11. Système de commande de prise de vue de terminal mobile selon l'une quelconque des revendication 8-10, dans lequel le module d'incitation d'erreur incite l'utilisateur, par vibration et par un menu déroulant, selon la commande d'échec de correspondance.
